(19) Europäisches Patentamt
European Patent Office
Office européen des brevets

(11) **EP 4 717 581 A2**

## (12) EUROPEAN PATENT APPLICATION

(43) Date of publication:
01.04.2026 Bulletin 2026/14

(21) Application number: 26154796.2

(22) Date of filing: 22.10.2021

(51) International Patent Classification (IPC):
**B63B 22/20** (2006.01)

(52) Cooperative Patent Classification (CPC):
**B63B 75/00; B63B 22/20; B63B 39/03;**
**B63B 43/06; F03D 13/10; F03D 13/25;**
B63B 2035/442; B63B 2035/446; B63B 2039/067;
F05B 2240/93; F05B 2240/95; Y02E 10/72;
Y02E 10/727

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: 23.10.2020 GB 202016857

(62) Document number(s) of the earlier application(s) in
accordance with Art. 76 EPC:
**21883381.2 / 4 232 709**

(71) Applicant: **Equinor Energy AS**
**4035 Stavanger (NO)**

(72) Inventor: **SKAARE, Bjørn**
**7023 Trondheim (NO)**

(74) Representative: **Dehns**
**10 Old Bailey**
**London EC4M 7NG (GB)**

Remarks:
This application was filed on 28.01.2026 as a
divisional application to the application mentioned
under INID code 62.

## (54) SPAR PLATFORM FOR A FLOATING OFFSHORE WIND TURBINE

(57)    A floating spar platform 7 for supporting an off-shore wind turbine comprises at least one first ballast tank 15 for holding adjustable ballast and at least one second ballast tank 16 for holding adjustable ballast. The second ballast tank 16 is arranged vertically higher than the first ballast tank 15, allowing a vertical distance between the bottom of the spar platform 7 and the centre of centre of gravity 31 of the spar platform 7 to be controlled by adjusting the amount of ballast held within the first and/or second ballast tanks 15, 16. This provides for control over the resonant response of the floating spar platform 7. During installation of a wind turbine on the floating spar platform 7, ballast associated with the spar platform may be adjusted in order to increase the vertical distance between the bottom of the spar platform 7 and the centre of gravity 31 of the spar platform 7, which reduces wave-induced resonant motions of the spar platform 7.

Fig. 2

**Description**

The present disclosure relates to the design of a spar platform for a floating offshore wind turbine.

Offshore wind turbines can be designed as fixed-foundation wind turbines that are fixed to the sea bed. However, for deeper waters where the wind is often stronger and more consistent, it may be difficult or uneconomical to fix a wind turbine to the sea bed. It has therefore been proposed to provide floating wind turbines in order to enable the wind turbine to be located in deeper waters. One example of a floating wind turbine has a conventional wind turbine structure mounted on a floating foundation, such as a "spar buoy" type structure. A spar buoy is an elongate, typically cylindrically shaped, buoyant structure and provides a stable support for offshore wind turbines.

When a floating wind turbine is acted on by forces, such as those caused by changes in wind speed or waves, the whole structure moves about in the water. These motions may have a large amplitude but relatively low frequency, i.e. they are large slow motions. The motions experienced are described as "heave" which is the linear vertical (up/down) motion, "sway" which is the linear lateral (side-to-side) motion, "surge" which is the linear longitudinal (front/back) motion, "roll" which is the rotation of the body about its horizontal (front/back) axis, "pitch" which is the rotation of the body about its transverse (side-to-side) axis, and "yaw" which is the rotation of the body about its vertical axis.

Floating wind turbines are typically assembled by mounting a wind turbine onto a spar buoy at an offshore location, i.e. whilst the spar buoy is floating in a body of water. There is a period of time when the spar buoy is floating in the body of water separate from the wind turbine structure, during which the spar buoy can be heavily influenced by wave motions, leading to large undesirable motions of the spar buoy. These motions can make it difficult to install the wind turbine components onto the spar buoy.

In order to minimise the wave-induced motion of the spar buoy, it has been common to carry out installation in calm, sheltered waters, such as deep water fjords. In practice, this limits the application of floating wind turbines to regions with access to sheltered waters, where the water is deep enough to accommodate the draft of the spar buoy.

In a first aspect, the present invention may provide a floating spar platform for supporting an offshore wind turbine, the spar platform comprising: at least one first ballast tank for holding adjustable ballast; and at least one second ballast tank for holding adjustable ballast, wherein the second ballast tank is arranged vertically higher than the first ballast tank.

The phrase "higher than" as used herein means that when a quantity of ballast is held in the two tanks, the second, higher, ballast tank will have a higher centre of mass than the first, lower, ballast tank. This may be achieved, for example, by arranging the second ballast tank vertically above the first ballast tank, or by virtue of the second ballast tank having a bottom or lower end that is arranged higher than the bottom or lower end of the first ballast tank.

In the absence of any damping or driving forces, systems will tend to oscillate at their natural frequencies. A system driven by an external force at its natural frequency will show a maximum resonant response, and will oscillate at a higher amplitude compared to when the same force is applied at another frequency. The period of the oscillations corresponding to the natural frequency is known as the natural period.

Floating structures have a natural period that is determined, in part, by their mass, shape and buoyancy. When a floating structure is acted on by oscillating forces, e.g. waves, with a period at or close to their natural period, the floating structure can experience large amplitude motions. Hence, if the structure is floating at a location where the period of the waves coincides with its natural period, the structure will experience large wave-induced motions. The floating structure may have different natural periods for different motions, e.g. heave, pitch, roll etc. The wave-induced motions should be limited during installation of a wind turbine on a floating spar platform since, if the wave-induced motions are too large, it may become impossible to mount and/or affix the wind turbine to the spar platform.

By providing a spar platform with at least one ballast tank arranged higher than another, it is possible to adjust the location of the centre of gravity of the spar platform by controlling the distribution of ballast between the first and second ballast tanks. As a result, the natural period of the spar platform in pitch and roll can be controlled and/or increased. For instance, adding ballast to the second ballast tank to raise the centre of gravity of the spar platform (relative to the bottom of the spar platform) may increase the natural period of the spar platform in pitch and/or roll. This is because the natural periods of the spar platform in pitch and roll depend at least in part on the position of the centre of gravity of the spar platform relative to its centre of buoyancy. Hence, the ballast tank arrangement means that wave-induced motions in pitch and roll can be controlled and/or reduced, even in rough waters such as open sea, by adjusting the distribution of the ballast within the ballast tanks. In this way, the processes of installing a wind turbine on the floating spar platform and/or performing maintenance of a wind turbine supported by the spar platform can be made less sensitive to sea conditions.

Typically, the second ballast tank may be empty during normal operation of the floating wind turbine (i.e. when it is generating electricity). Ballast may be added to the second ballast tank during installation and/or maintenance procedures in order to move the centre of gravity of the floating structure upwards and away from the bottom of the spar platform and then the ballast may be removed after installation and/or maintenance has been completed for normal operation of the wind turbine.

The term "spar platform", as used herein, describes a floating structure, e.g. a vertically elongate buoyant structure, without a wind turbine and/or components of a wind turbine installed thereon. That is to say, the spar platform does not include a tower, a nacelle and/or a rotor of a wind turbine. Wind turbine components (e.g. a tower, nacelle and/or rotor) may be installed on the spar platform to form a floating offshore wind turbine.

The spar platform may comprise multiple, i.e. more than one, first ballast tanks and/or second ballast tanks. In such an arrangement, all of the second ballast tanks may be arranged vertically higher than all of the first ballast tanks.

The adjustable ballast may be a liquid. For instance, the adjustable ballast may be water, preferably sea water. Hence, the first and second ballast tanks may be watertight, i.e. able to hold a liquid. Sea water is a readily available source of ballast at an offshore location.

The first and/or second ballast tanks may be defined within an internal compartment of the spar platform. The internal compartment may be open at one end (e.g. the upper end of the spar platform when in use) and/or have an opening to allow ballast to be added to the internal compartment. The spar platform may be hollow and closed at one end, thereby defining the internal compartment within the hollow interior of the spar platform.

The internal compartment may be separated into the first and second ballast tanks by a divider arranged across the compartment. The divider may be arranged such that when the spar buoy is in use the divider is arranged horizontally. The divider is preferably impermeable and provides a water tight seal between the first and second ballast tanks. Accordingly, in the absence of other means, liquid (e.g. sea water) may not pass through the divider and between the first and second ballast tanks. In this way, ballast can be held in the second ballast tank, above the first ballast tank, and is prevented from draining into the first ballast tank through the divider.

Alternatively, two separate tanks may be arranged in the internal compartment in order to provide the first and second ballast tanks. The tanks may be water tight and hence allow liquid ballast to be held in each of the tanks.

The first and/or second ballast tanks may be arranged on, e.g. mounted on, an exterior surface of the spar platform. This may allow for easy and simple installation of the ballast tank(s) on the spar platform. The first and/or second ballast tanks may be removably mounted on the exterior surface of the spar platform. In this way it may be possible to add the ballast tank(s) when necessary, e.g. during installation or maintenance of a floating offshore wind turbine, and remove the ballast tank(s) when not required. This may also allow the positions, e.g. their distance from the bottom of the spar platform, of the ballast tank(s) to be adjusted.

The spar platform may have a vertical length of greater than 50m, preferably greater than 100m.

When the first and second tanks are empty, the spar platform may have a displacement of greater than 3000 tonnes, preferably greater than 9000 tonnes, more preferably greater than 15000 tonnes.

When the first and second ballast tanks are empty, the draft of the spar platform may be greater than 30m, preferably greater than 40m, more preferably greater than 50m.

When the ballast tanks are empty, the spar platform may have a mass of at least 7000 tonnes, preferably at least 9000 tonnes, more preferably at least 10000 tonnes.

The cross sectional area of the spar platform may vary along its length, i.e. the cross sectional area of the spar platform may not be constant. As a result, when the spar platform is floating in a body of water, it is possible to change the cross sectional area of spar platform at the waterline by controlling the height of the spar buoy relative to the body of water. By providing a spar platform in which the cross sectional area of the spar buoy at the waterline can be changed, the natural period of the spar buoy in heave, pitch and roll can be controlled and/or increased. For example, reducing the cross sectional area of the spar buoy at the waterline may increase the natural period of the spar buoy in heave, pitch and/or roll. This is because the natural periods of the spar buoy in heave, pitch and roll depend at least in part on the cross sectional area of the spar platform at the waterline. Hence, the motion characteristics can be made more favourable for installing a wind turbine by controlling the cross sectional area of the spar platform at the waterline.

The spar platform may comprise one or more tapered portion(s) e.g. one or more frustoconical portion(s). The entire spar platform may be tapered or only a portion(s) of the spar buoy may be tapered.

The spar platform may have a portion with a cross sectional area that is smaller than the cross sectional area of another portion. For example, the spar platform may comprise a first portion with a cross sectional area that is smaller than the cross sectional area of a second portion.

The spar platform may have a plurality of portions of different cross sectional area. Each of these portions may have a constant cross sectional area along its length. Between the portions of constant cross section, the spar platform may comprise transition sections with non-constant cross section. For example the transitions sections may be frustoconical sections between the portions of constant cross section.

One or more of the portions of constant cross section may have a length of at least 10m, preferably at least 20m, more preferably at least 30m.

The spar platform may decrease in cross sectional area from the bottom of the spar platform to the top. That is to say, in use, i.e. when the spar platform is floating in a body of water, the region of the spar platform at the lower vertical end may have a larger cross sectional area than region of the spar platform at the upper vertical end. This may be achieved by a constant change in cross sectional area, one or more step changes in cross sectional area and/or one or more transition sections between sections of approximately constant cross sectional area. For example, the cross sectional area at the bottom of spar platform may be between $75m^2$ to $350m^2$, e.g. $175m^2$. The cross sectional area of the top of the spar platform may be between 15m$^2$ to 75m$^2$, e.g. 50m$^2$.

The spar platform may be circular, or partially circular in cross-section.

The spar platform may include one or more pump(s) arranged to pump ballast into and/or out of the first and/or second ballast tanks. In this way, the amount of ballast in the first and/or second ballast tanks can be controlled without the need for external pumping equipment, for example pumping equipment provided on a vessel adjacent to the spar platform. The pumps make it possible to adjust the total amount of ballast in the spar platform by adding ballast to the tanks or removing ballast from the tanks. The pumps also make it possible to adjust the distribution of ballast between the first and second tanks. As discussed above, this has an effect on the centre of gravity of the spar platform.

The pump(s) may be fluidly connected to the first and/or second tanks by piping.

The pump(s) may be arranged to pump water, e.g. sea water, into/out of the ballast tanks.

The pump(s) may be centrifugal pumps.

One or more of the pump(s) may be fluidly connected to both the first ballast tank and the second ballast tank. In this way, the pump(s) can be used to pump ballast into and out of each of the first and second ballast tanks. The pumps(s) may also be used to pump ballast from the first ballast tank to the second ballast tank and/or from the second ballast tank to the first ballast tank. Thus, the location of the ballast associated with the spar platform can easily be controlled.

The pump(s) may be removably installed on the spar platform. In this way, the pump(s) can be easily replaced and/or repaired, for instance if they become damaged, This also allows for the pump(s) to be removed from the spar platform when pumping is not required, and installed only when needed.

The fist ballast tank may be fluidly connected to the second ballast tank through a flow regulating device for controlling a flow of fluid (e.g. ballast) between the first and second ballast tanks. The flow regulating device may be a valve, such as a control valve. The flow regulating device may be operable in two states, a first state in which fluid may pass through the flow regulating device such that the first and second ballast tanks are fluidly connected via the flow regulating device, and a second state in which fluid cannot pass between the first and second ballast tanks via the flow regulating device. When in the second state, there may be no fluid connection between the first and second ballast tanks. For instance, when the flow regulating device is a control valve then opening the control valve, fully or partially, may fluidly connect the first ballast tank with the second ballast tank. When the valve is closed, there may be no fluid connection between the first and second ballast tanks.

By providing a flow regulating device, some or all of the ballast within the second ballast tank can be easily and quickly transferred to the first ballast tank. As discussed above, transferring ballast from the second ballast tank to the first ballast tank will lower the centre of gravity of the spar platform and have an effect on the natural periods of the spar platform in roll and pitch.

Whilst installing a wind turbine on the spar platform, the spar platform may be in a temporary installation state. **In** the installation state, the natural periods of the spar platform may be such that they do not align with the period of the waves acting on the spar platform. This may be achieved by holding adjustable ballast in the second ballast tank, whilst holding relatively little or no adjustable ballast in the first ballast tank. Once the wind turbine has been installed, the spar platform may be moved from the installation state to an operational state designed to stably support the floating offshore wind turbine during its operation (i.e. when it is generating electricity). This may be achieved by removing adjustable ballast from the second tank and/or adding adjustable ballast to the first tank. For instance, adjustable ballast may be passed from the second ballast tank to the first ballast tank via the flow regulating device. Hence, the flow regulating device provides a means to easily change the state of the spar platform, from a temporary installation state to an operational state.

The flow regulating device, e.g. a control valve, may be operated by electrical, hydraulic or pneumatic actuators.

Preferably, the flow regulating device is arranged to allow for liquid (i.e. liquid ballast) within the second ballast tank to drain to the first ballast tank under gravity, when the flow regulating device is in the first state, e.g. when the flow regulating device is open or partially open. This may be achieved by arranging the flow regulating device at the lowest point within the second ballast tank. That is to say, the flow regulating device may be arranged such that it is at the lower vertical end of the second ballast tank when the spar buoy is in use, i.e. when the spar buoy is floating in a body of water. For example, when the first and second ballast tanks are separated by a divider, the flow regulating device may be arranged in the divider to provide a controllable fluid passage through the divider. With such an arrangement, it is not necessary to pump the ballast from the second tank to the first ballast tank, for example using one or more of the pumps described above. Hence, this process can be achieved more efficiently since there is no need to power pumps.

The bottom of the second ballast tank may slope downwardly towards the flow regulating device. Hence, liquid within the second ballast tank will flow down the slope towards the flow regulating device under the action of gravity. This may improve draining of the second ballast tank via the flow regulating device.

The spar platform may be arranged such that when the first and second ballast tanks are empty, the centre of gravity of the spar platform is lower than its centre of buoyancy. That is to say, in use, the centre of gravity of the spar platform may be vertically below the centre of buoyancy of the spar platform. To achieve this, the spar platform may include fixed ballast.

When the centre of gravity of the spar platform is vertically below the centre of buoyancy, any angular displacement of the floating structure will produce a righting moment that will act to oppose the angular displacement. Hence, the spar platform will remain stable against overturning so long as the centre of gravity is vertically below the centre of buoyancy. As the distance between the centre of gravity and the centre of buoyancy is decreased, this stabilising effect is reduced.

The fixed ballast may be arranged at the lower end of the spar platform. The position of the fixed ballast at the lower end of the spar platform will cause the centre of gravity of the spar platform to be closer to the bottom of the spar platform compared to the centre of gravity of the spar platform without the fixed ballast. As a result, the spar platform will have greater stability in order to resist angular displacement and prevent the spar platform from overturning.

When the first and second ballast tanks are empty, the fixed ballast may account for most of the mass of the spar platform. For example, at least 50%, and preferably greater than 70% of the mass of the spar platform. In some cases, the fixed ballast may account for at least 90% of the mass of the spar platform when the ballast tanks are empty.

The fixed ballast may have a mass of at least 4500 tonnes, preferably at least 6500 tonnes, more preferably at least 8000 tonnes.

The fixed ballast may include a heave plate. The heave plate may be affixed to the lower end of the spar platform, and may comprise a circular plate having a larger diameter than the lower end of the spar platform. In addition to adding ballast to the spar platform, the heave plate provides damping to the spar platform against heave motion and also increases the hydrodynamic added mass of the spar platform in heave. Hydrodynamic added mass is a measure of the additional inertia of a structure, such as the spar platform, as a result of the water acting on the structure. When a structure moves through water, additional inertial forces act on the structure because the structure must move a volume of the surrounding water as it moves through it.

One or both of the first and second ballast tanks may be sized such that they can hold a volume of adjustable ballast that has a mass that is approximately the same mass (e.g. at least 85% of the mass) as a wind turbine to be installed on the spar platform. The first and/or second ballast tanks may each have a volume of up to 1500m$^3$, optionally up to 2000m$^3$, or up to 2500m$^3$. This may allow for up to 1500 tonnes, 2000 tonnes, or 2500 tonnes respectively of water to be held in the first and/or second ballast tanks.

The first and second ballast tanks may have equal volume. Alternatively, the second ballast tank may have a larger volume than the first ballast tank. This may make it possible to hold a larger mass in the second ballast tank. Hence, the maximum achievable distance between the bottom of the spar platform and the centre gravity can be increased.

The spar platform may comprise a controller. The controller may be arranged to adjust the ballast within the first and/or second ballast tanks. For instance, the controller may be arranged to control operation of the pump(s) and/or flow regulating device.

In a second aspect, the present invention may provide a floating offshore wind turbine comprising a wind turbine mounted on the floating spar platform of the first aspect. The floating offshore wind turbine of the second aspect may include any one or more or all of the optional features discussed above in respect of the first aspect.

The wind turbine may include a tower. The tower may be mounted, preferably removably mounted, on the spar platform.

The wind turbine may comprise a nacelle. The nacelle may be mounted, e.g. removably, on the tower, preferably at the top of the tower. The nacelle may be rotatably mounted to the tower. A generator and its associated electronics may be mounted, e.g. removably mounted, in or on the nacelle.

One or more rotor blades may be mounted, e.g. removably mounted, via a rotor hub to the nacelle. Preferably, the generator is configured to be driven by rotation of the rotor hub. The wind turbine may include, for example, three rotor blades. The rotor blades may be rotatably mounted to the rotor hub, for example such that their pitch may be controlled. The rotor hub and rotor blades together may form a rotor of the wind turbine.

The nacelle, the generator (and associated electronics), and the rotor may together form a rotor-nacelle assembly.

The wind turbine may have a rotor diameter of greater than 100m, more preferably greater than 150m and most preferably greater than 200m. For instance, the wind turbine may have a rotor diameter of between 160m and 250m. Hence, the rotor blades may each have a length greater than 50m, greater than 75m or greater than 100m.

The rotor hub is preferably suitably located to accommodate the rotor. Accordingly, the rotor hub height of the wind turbine may be greater than 100m, greater than 150m or greater than 200m. To accommodate the rotor hub at these heights, the tower height may be greater than 100m, greater than 150m or greater than 200m.

The tower may have a mass of between 500 and 1000 tonnes. The rotor-nacelle assembly may have a mass of between 500 and 1000 tonnes. Hence, the wind turbine may have a mass of between 1000 and 2000 tonnes.

The wind turbine may have a rated power output of greater than 8MW, preferably greater than 10MW and more preferably greater than 12MW.

In a third aspect, the present invention may provide a method of installing a floating offshore wind turbine, the method comprising: providing a floating spar platform in a body of water; using adjustable ballast associated with the floating spar platform in order to increase a first vertical distance between a bottom of the spar platform and a centre of gravity of the spar platform; and after the first distance has been increased, installing a wind turbine on the floating spar platform.

The spar platform may comprise any one or more or all of the optional features described above in respect of the first aspect. The wind turbine may comprise any one or more or all of the optional features described above in relation to the second aspect.

The spar platform and/or controller of the first aspect may be arranged to perform the method of the third aspect and/or one or more or all of the method steps described below.

Use of the adjustable ballast may include adding adjustable ballast to the spar platform, removing adjustable ballast from the spar platform and/or adjusting a location of the adjustable ballast associated with the spar platform.

Increasing the first vertical distance may be referred to herein as "raising" or "raising the height of" the centre of gravity. However, it will be appreciated that this refers to an increase in the height of the centre of gravity relative to the bottom of the spar platform.

As discussed above, the natural periods of a floating structure, such as a spar platform, are at least partially dependent on the position of the centre of gravity of the structure relative to its centre of buoyancy. Increasing the distance between the bottom of the spar platform and its centre of gravity may increase the natural periods of the spar platform in pitch and/or roll. This can control and/or reduce wave-induced motions of the spar platform and make installing the wind turbine on the platform easier, and increases the range of sea conditions in which a wind turbine can be installed.

The centre of gravity of the spar platform is preferably not raised (relative to the bottom of the spar platform) to or above the centre of buoyancy of the spar platform. That is to say, the centre of gravity of the spar platform remains below the centre of buoyancy of the spar platform after being raised. Hence, increasing the first vertical distance may reduce a second vertical distance between the centre of gravity of the spar platform and the centre of buoyancy of the spar platform. By maintaining the centre of buoyancy above the centre of gravity, the spar platform will remain stable against overturning.

The first vertical distance may be increased such that the second vertical distance is less than 10m, preferably less than 5m, more preferably less than 1m.

As discussed above, the natural periods of a floating structure in roll and pitch depend at least in part on the position of the centre of gravity of the floating structure relative to its centre of buoyancy. Hence, the natural period of the spar platform in pitch and roll can be controlled and/or increased by adjusting the first and/or second vertical distances. Reducing the second vertical distance will cause the natural period of the spar platform to increase.

The first vertical distance may be increased such that the natural period of the spar platform in pitch and/or roll is greater than 20 seconds, preferably greater than 25 seconds.

Wave motions typically have periods in the range of 5 to 20 seconds. Hence, increasing the natural period of the spar platform above 20 seconds will move the natural period of the spar platform out of the typical range of wave periods. As a result, the wave motion will have less of an impact on the motion of the spar platform, and the amplitude of the rolling and pitching motion of the spar platform due to wave motion will be reduced.

Reducing the second vertical distance may reduce the stability of the spar platform. Hence, the spar platform may be stabilised during the installation process. This may be achieved by using a crane to stabilise the spar platform during installation. The crane may be mounted on a floating structure adjacent to the spar platform.

It will be appreciated that after the wind turbine has been installed on the spar platform, a centre of gravity of the floating structure (i.e. the spar platform and the wind turbine combined) may be vertically above a centre of buoyancy of the floating structure.

Increasing the first vertical distance may comprise adding ballast to the second ballast tank. The ballast may be water, e.g. sea water.

Increasing the first vertical distance may include removing ballast from the first ballast tank. For instance, some ballast may be transferred from the first ballast tank to the second ballast tank.

It will be appreciated that increasing the first vertical distance may include increasing a proportion of the adjustable ballast associated with the floating spar platform that is held in the second ballast tank. This may include adding ballast to the second ballast tank, removing ballast from the first ballast tank and/or transferring ballast from the first ballast tank to the second ballast tank.

The proportion of the adjustable ballast associated with the floating spar platform that is held in the second ballast tank may be increased by adding ballast to or removing ballast from each of the first and second ballast tanks. This may be achieved, for instance, by adding a greater mass of ballast to the second ballast tank relative to the mass of ballast that is added to the first ballast tank. Alternatively, a greater mass of ballast may be removed from the first ballast tank compared to the mass of ballast removed from the second ballast tank.

The first vertical distance may be increased by mounting/affixing (preferably removably) at least one external ballast tank to an exterior surface of the spar platform. Preferably, the mounting location of the external ballast tank(s) is displaced vertically from the bottom of the spar platform such that once the external ballast tank(s) are mounted to the platform a lower end of each external ballast tank is vertically displaced from the bottom of the spar platform. The external ballast tank(s) may contain adjustable ballast prior to being mounted to the spar platform, i.e. the external ballast tank(s) may contain ballast during mounting. Ballast may be added to the external ballast tank(s) once they have been mounted to the spar platform. The ballast may be liquid ballast, such as sea water, and/or solid ballast.

The overall mass of the floating spar platform may be increased. This may be achieved by adjusting the amounts of ballast in the first and second tanks, and in particular by increasing the total amount of adjustable ballast associated with the floating spar platform. For instance, ballast may be added to one or both of the first and second integral ballast tanks, or ballast may be added to the spar platform by mounting one or more external ballast tanks to the spar platform, as discussed above.

Preferably, a cross sectional area of the spar platform at the surface of the body of water, i.e. the waterline, is reduced. The cross sectional area of the spar platform at the waterline may be reduced before the wind turbine is installed on the platform.

As discussed above, the natural periods of a floating structure in heave, pitch and roll depend at least in part on cross sectional area of the floating structure at the waterline. Hence, the natural period of the spar platform in heave, pitch and roll can be controlled and/or increased by adjusting the cross sectional area of the spar platform at the waterline. Reducing the cross sectional area of the spar platform at the waterline will cause the natural period of the spar platform in heave, pitch and roll to increase. Where the spar platform has a cross sectional area that varies along its length, this may be achieved by adjusting a vertical position of the spar platform relative to the waterline.

Ballast may be added to the first and/or second ballast tanks to increase the mass of the spar platform and cause the vertical position of the floating offshore wind turbine to change relative to the water line. For instance, if the spar platform has a larger cross section at its lower end compared to its upper end, the cross sectional area of the spar platform at the surface of the body of water may be decreased by increasing the ballast in the first and/or second ballast tanks. The increased ballast mass in the first and/or second ballast tanks will cause the spar platform to sink lower in the water such that the region of the spar buoy having a smaller cross sectional area may be at the waterline. Alternatively, or in addition, one or more external ballast tanks may be mounted on the spar platform, as discussed above, in order to increase the ballast associated with the spar platform and cause it to sink lower in the water.

The cross sectional area of the spar platform at the waterline may be reduced to less than $100m^2$, preferably less than $75m^2$, more preferably less than $25m^2$.

The cross sectional area of the spar platform at the waterline may be reduced such that the natural period of the spar platform in heave, pitch and/or roll is greater than 20 seconds, preferably greater than 25 seconds. This will move the natural period of the spar platform out of the typical range of wave periods (5-20 seconds). As a result, the wave motion will have less of an impact on the motion of the spar platform, and the amplitude of the heave, rolling and pitching motion of the spar platform due to wave motion will be reduced.

The natural periods of the spar platform in heave, pitch and/or roll may be adjusted and/or increased by adjusting the second vertical distance, and by adjusting the cross sectional area of the spar platform at the waterline in combination. The second vertical distance, and the cross sectional area at the waterline may by adjusted as discussed above, for instance by adding ballast to the first and/or second ballast tanks.

Preferably, prior to installation of the wind turbine on the spar platform, the mass of the spar platform is approximately the same as the mass (e.g. between 80% and 120% of the mass, more preferably between 90% and 110% of the mass, and most preferably between 95% and 105% of the mass) of the floating offshore wind turbine during operation (i.e. when producing electricity). The mass of the floating offshore wind turbine during operation may include the spar platform, the wind turbine and any adjustable ballast held in the first and/or second ballast tanks, for example to provide preferable motion characteristics of the floating offshore wind turbine during operation. This may be achieved by adding ballast to the first and/or second ballast tanks. For instance, where the wind turbine has a mass of between 500 to 1000 tonnes, the total ballast held in the first and second ballast tanks may have a mass of 500 to 1000 tonnes. In this way, it may possible to imitate the motion characteristics of the operational floating offshore wind turbine during installation.

During installation, the spar platform may be tethered to the sea bed by a mooring system. The mooring system may comprise three anchor lines, e.g. anchor chains.

Components and/or partially assembled pieces of the wind turbine may be installed on the spar buoy separately, i.e. one at a time. Components and/or partially assembled pieces of the wind turbine may be mounted on, or attached to, components and/or partially assembled pieces already installed on the spar buoy. For instance, the tower may be installed on the floating platform and the nacelle subsequently mounted on the tower.

Alternatively, the wind turbine may be installed on the spar buoy in one piece. That is to say that all of the major parts or components of the wind turbine, including at least the tower, nacelle, rotor hub and blades, may be assembled prior to being installed.

A crane may be used to lift the wind turbine, components of the wind turbine, and/or partially assembled pieces of the wind turbine into a mating relationship with the spar buoy so as to facilitate installation on the spar buoy. For instance, the crane may be used to lift the wind turbine, components of the wind turbine, and/or partially assembled pieces of the wind turbine from a vessel and into a mating relationship with the spar buoy.

The crane may be the same crane discussed above used to stabilise the spar platform during installation.

Alternatively, the crane used to lift the wind turbine, components of the wind turbine, and/or partially assembled pieces of the wind turbine into a mating relationship with the spar buoy may be a different crane. This crane may be mounted on a floating structure adjacent to the spar platform. The floating structure may be tethered to the sea bed by a mooring system.

After the wind turbine has been installed on the spar platform, adjustable ballast associated with the floating spar platform may be moved in order to decrease a third vertical distance between a centre of gravity of the floating offshore wind turbine and the bottom of the spar platform. This may be achieved by removing ballast from the second tank and/or adding ballast to the first ballast tank. For instance, some or all of the ballast from the second ballast tank may be transferred to the first ballast tank. Where the first and second ballast tanks are fluidly connected via a flow regulating device, this may be achieved by arranging the flow regulating device in the first state, e.g. by opening (fully or partially) the flow regulating device.

Decreasing the third vertical distance may include decreasing a proportion of the adjustable ballast associated with the floating spar platform that is held in the second ballast tank. For instance, adjustable ballast may be removed from the second ballast tank, added to the first ballast tank and/or transferred from the second ballast tank to the first ballast tank.

The proportion of the adjustable ballast associated with the floating spar platform that is held in the second ballast tank may be decreased by adding ballast to or removing ballast from each of the first and second ballast tanks. This may be achieved, for instance, by adding a smaller mass of ballast to the second ballast tank relative to the mass of ballast that is added to the first ballast tank. Alternatively, a smaller mass of ballast may be removed from the first ballast tank compared to the mass of ballast removed from the second ballast tank.

As mentioned above, during normal operation of the wind turbine, the second ballast tank may be empty. Hence, decreasing the third vertical distance may include emptying the second ballast tank of ballast.

The third vertical distance may be decreased by removing one or more external ballast tanks from the spar platform. A crane may be used to lift the external ballast tank(s) off and away from the spar platform.

The additional mass of the wind turbine may cause the centre of gravity of the floating structure (i.e. the spar platform and the wind turbine) to rise above the centre of buoyancy of the floating structure. As discussed above, this may negatively affect the stability of the floating structure. Hence, the centre of gravity of the floating structure may be lowered to below the centre of buoyancy of the floating structure.

The method may be carried out at an offshore location, i.e. greater than 1km, 2km or 5km from the shore.

In a fourth aspect, the present invention may provide a method of performing maintenance of a floating offshore wind turbine, wherein the floating offshore wind turbine comprises a wind turbine mounted on a floating spar platform, the method comprising: using adjustable ballast associated with the floating spar platform in order to increase a first vertical distance between a bottom of the spar platform and a centre of gravity of the floating offshore wind turbine; and after the first vertical distance has been increased, removing a component from the floating offshore wind turbine and/or installing a component on the floating offshore wind turbine.

Use of the adjustable ballast may include adding adjustable ballast to the spar platform, removing adjustable ballast from the spar platform and/or adjusting a location of the adjustable ballast associated with the spar platform.

As discussed above, the natural periods of a floating structure, such as a floating offshore wind turbine, in pitch and roll are at least partially dependent on the position of the centre of gravity of the structure relative to its centre of buoyancy. If, during maintenance, the natural periods of the floating offshore wind turbine in pitch and roll coincide with typical wave periods, the wave-induced motion of the floating offshore wind turbine may be large, and may make it difficult to remove and/or install components. This may be the case, for example, if one or more components is removed from a floating offshore wind turbine, thereby moving its centre of gravity towards the bottom of the spar platform. This can reduce the natural periods of the floating offshore wind turbine in pitch and roll and increase wave-induced motions. This effect can be negated and/or reduced by increasing the first vertical distance before removing or installing the component. This can control and/or reduce wave-induced motions of the floating offshore wind turbine and make maintenance and/or repair easier, and increases the range of sea conditions in which it is possible to carry out maintenance and/or repair of a floating offshore wind turbine.

The spar platform may comprise any one or more or all of the optional features described above in respect of the first aspect.

The wind turbine may comprise any one or more or all of the optional features described above in relation to the second aspect.

The spar platform and/or controller of the first aspect may be arranged to perform the method of the fourth aspect and/or one or more or all of the method steps described below.

The component may be any one or more or all of the tower, the nacelle, the rotor, the rotor hub, a blade, and/or the generator. The method may comprise removing and/or installing one or more of the components of the floating offshore wind turbine.

Preferably, increasing the first vertical distance does not cause the centre of gravity to move vertically above a centre of buoyancy of the floating offshore wind turbine. That is to say, the first vertical distance is preferably increased such that the centre of gravity of the floating offshore wind turbine is vertically below the new centre of buoyancy of the floating offshore wind turbine.

When component(s) are removed from the floating offshore wind turbine, the first vertical distance is preferably increased such that, after the component(s) have been removed, the new centre of gravity of the floating offshore wind turbine is vertically below the new centre of buoyancy of the floating offshore wind turbine. This may mean that, before the component(s) have been removed, the centre of gravity is raised above the centre of buoyancy. Removing the component(s) may lower the centre of gravity such that if falls below the centre of buoyancy.

By ensuring that the centre of buoyancy is above the centre of gravity, the floating offshore wind turbine will be stable against overturning during maintenance.

The first vertical distance may be increased such that a second vertical distance between the centre of gravity and the centre of buoyancy of the floating offshore wind turbine is less than 10m, preferably less than 5m, more preferably less than 1m.

The first vertical distance may be increased such that the natural period of the floating offshore wind turbine in pitch and/or roll is greater than 20 seconds, preferably greater than 25 seconds.

As discussed above, wave motions typically have periods in the range of 5 to 20 seconds. Hence, controlling the natural period of the floating offshore wind turbine to be above 20 seconds will ensure that the natural period of the floating offshore wind turbine is outside of the typical range for wave periods. As a result, the wave motion will have less of an impact on the motion of the floating offshore wind turbine during the maintenance process, and the amplitude of the rolling and/or pitching motion of the floating offshore wind turbine due to wave motion will be reduced.

Increasing the first vertical distance may comprise adding ballast to the second ballast tank. The ballast may be water, e.g. sea water.

Increasing the first vertical distance may include removing ballast from the first ballast tank. Some ballast may be transferred from the first ballast tank to the second ballast tank, for instance by pumping ballast from the first tank to the second tank.

It will be appreciated that increasing the first vertical distance may include increasing a proportion of the adjustable ballast associated with the floating spar platform that is held in the second ballast tank. This may include adding ballast to the second ballast tank, removing ballast from the first ballast tank and/or transferring ballast from the first ballast tank to the second ballast tank.

The proportion of the adjustable ballast associated with the floating spar platform that is held in the second ballast tank may be increased by adding ballast to or removing ballast from each of the first and second ballast tanks. This may be achieved, for instance, by adding a greater mass of ballast to the second ballast tank relative to the mass of ballast that is added to the first ballast tank. Alternatively, a greater mass of ballast may be removed from the first ballast tank compared to the mass of ballast removed from the second ballast tank.

The second ballast tank may be empty during normal operation of the floating wind turbine (i.e. when it is generating electricity). Ballast may be added to the second ballast tank during maintenance of the wind turbine in order to increase the first vertical distance.

After maintenance has been carried out, the proportion of the adjustable ballast held in the second ballast tank may be reduced. For instance, adjustable ballast may be removed from the second ballast tank, added to the first ballast tank and/or transferred from the second ballast tank to the first ballast tank. The second ballast tank may be emptied of adjustable ballast after maintenance has been carried out.

The proportion of the adjustable ballast associated with the floating spar platform that is held in the second ballast tank may be reduced by adding ballast to or removing ballast from each of the first and second ballast tanks. This may be achieved, for instance, by adding a smaller mass of ballast to the second ballast tank relative to the mass of ballast that is added to the first ballast tank. Alternatively, a smaller mass of ballast may be removed from the first ballast tank compared to the mass of ballast removed from the second ballast tank.

The first vertical distance may be increased by mounting/affixing (preferably removably) at least one external ballast tank to an exterior surface of the spar platform. The mounting location of the external ballast tank(s) is preferably displaced vertically from the bottom of the spar platform such that once the external ballast tank(s) are mounted to the platform a lower end of each external ballast tank is vertically displaced from the bottom of the spar platform. The external ballast tank(s) may contain adjustable ballast prior to being mounted to the spar platform, i.e. the external ballast tank(s) may contain ballast during mounting. Ballast may be added to the external ballast tank once it has been mounted to the spar platform. The ballast may be liquid ballast, such as sea water, and/or solid ballast.

The overall mass of the floating spar platform may be increased by adjusting the amounts of ballast in the first and second tanks, and/or by adding ballast to the spar platform by way of the external ballast tank(s). When components(s) are to be removed from the floating offshore wind turbine, the mass of the added ballast may be equivalent to the mass of the component(s) to be removed. Hence, after the component(s) are removed from the floating offshore wind turbine, the mass of the floating offshore wind turbine may be the same as, or approximately the same as (e.g. between 80% and 120% of the mass, more preferably between 90% and 110% of the mass, and most preferably between 95% and 105% of the mass), the mass of the floating offshore wind turbine during operation (i.e. when producing electricity).

The cross sectional area of the spar platform at the surface of the body of water, i.e. the waterline, may be controlled. Where the spar platform has a cross sectional area that varies along its length, this may be achieved by controlling the vertical position of the floating offshore wind turbine relative to the waterline.

Ballast may be added to the first and/or second ballast tanks to increase the mass of the spar platform and cause the vertical position of the floating wind turbine to change relative to the water line. For instance, if the spar platform has a larger cross section at its lower end compared to its upper end, the cross sectional area of the spar platform at the surface of the body of water may be decreased by increasing the ballast in the first and/or second ballast tanks. The increased ballast mass in the first and/or second ballast tanks will cause the spar platform to sink lower in the water such that the region of the spar platform having a smaller cross sectional area may be at the waterline.

The mass of the spar platform may be increased by mounting one or more external ballast tanks on the spar platform, as discussed above, to cause the spar platform to sink lower in the water

The cross sectional area of the floating offshore wind turbine at the waterline may be controlled such that the cross section at the waterline is less than $100m^2$, preferably less than $75m^2$, more preferably less than $25m^2$.

The cross sectional area of the floating offshore wind turbine at the waterline may be controlled and/or adjusted such that the natural period of the floating offshore wind turbine in heave, pitch and/or roll is greater than 20 seconds, preferably greater than 25 seconds. This will ensure that the natural period of the floating offshore wind turbine in heave, pitch and/or roll is outside of the typical range for wave periods (i.e. 5-20 seconds). As a result, the wave motion will have less of an impact on the motion of the floating offshore wind turbine during the maintenance process, and the amplitude of the heave, rolling and/or pitching motion of the floating offshore wind turbine due to wave motion will be reduced. The cross sectional area of the floating offshore wind turbine at the waterline may be adjusted before the component(s) are removed from the floating offshore wind turbine and/or before the component(s) are installed on the floating offshore wind turbine.

A crane may be used to lift the component(s) off and/or away from the floating offshore wind turbine. The crane may be used to lift the component(s) into a mating relationship with the floating offshore wind turbine. The component(s) may then be attached/affixed to the floating offshore wind turbine in the known manner. The crane may be mounted on a floating structure adjacent to the spar platform. The floating structure may be tethered to the sea bed by a mooring system.

When component(s) are removed from the floating offshore wind turbine, inspection and/or repair may be carried out on the floating offshore wind turbine whilst the component(s) are removed, i.e. not installed on the floating offshore wind turbine.

When components have been removed from the floating offshore wind turbine, the removed component(s) may be re-installed in the floating offshore wind turbine. For instance, the component(s) may be re-installed after the component has been inspected and/or repaired. Repair and/or inspection of the component may be carried out an offshore location adjacent to the floating offshore wind turbine, for instance on a vessel adjacent to the floating offshore wind turbine. Alternatively, the component may be taken off site, e.g. to an onshore location, for maintenance and/or inspection.

When components have been removed from the floating offshore wind turbine, a replacement component may be installed on the floating offshore wind turbine. This may be the case, for example, if the removed component is badly damaged and cannot be repaired, or if the removed component has reached the end of its operational lifetime. The crane may be used to lift the replacement component into a mating relationship with the floating offshore wind turbine. The replacement component may then be attached/affixed to the floating offshore wind turbine in the known manner.

After one or more component(s) are removed from the floating offshore wind turbine and/or (re-)installed on the floating offshore wind turbine, the natural periods of the floating offshore wind turbine in heave, pitch and/or roll may be adjusted, preferably to reduce wave-induced motion of the floating offshore wind turbine. This may make subsequent removal of component(s), installation of component(s) and/or inspection of the floating offshore wind turbine easier. This may be achieved as discussed above, for instance by moving ballast associated with the floating spar platform in order to increase a first vertical distance between a bottom of the spar platform and a centre of gravity of the floating offshore wind turbine, and/or by controlling the cross sectional area of the spar platform at the waterline. Preferably, the natural periods of the floating offshore wind turbine in heave, pitch and/or roll are adjusted such that they are greater than 20 seconds, or greater than 25 seconds.

During the maintenance procedure, the stability of the floating offshore wind turbine may be compromised. For instance, removing mass (e.g. a component) from the floating offshore wind turbine and/or increasing the first vertical distance may reduce the stability of the floating structure against overturning. For example, during maintenance, the centre of gravity of the floating offshore wind turbine may rise above its centre of buoyancy. Hence, the spar platform may be stabilised during the maintenance process. This may be achieved by using a crane to stabilise the spar platform during maintenance. The crane may be mounted on a floating structure adjacent to the spar platform. The floating structure may be tethered to the sea bed by a mooring system.

The floating offshore wind turbine may be tethered to the sea bed by a mooring system. The mooring system may comprise three anchor lines, e.g. anchor chains.

In yet another aspect, the present invention may provide a floating spar platform for supporting an offshore wind turbine, the spar platform comprising a ballast tank for holding adjustable ballast, wherein the ballast tank is movable such that a vertical distance between a bottom of the spar platform and the ballast tank can be adjusted.

By providing a moveable ballast tank, the vertical position of the centre of gravity of the spar platform can be altered by adjusting the vertical position of the ballast tank relative to the bottom of the spar platform. Accordingly, since the natural periods of a spar platform in pitch and roll depend at least in part on the position of the centre of gravity of the spar platform relative to its centre of buoyancy, this makes it possible to control and/or increase the natural period of the spar platform in pitch and roll.

The spar platform may comprise one or more or all of the optional features discussed above in respect of the first aspect.

In order to enable vertical movement of the ballast tank, the spar platform may comprise one or more actuators. The actuator(s) may be arranged to drive upwards and downwards motions of the ballast tank.

The actuator(s) may have a total lifting capacity of up to 1500 tonnes, 2000 tonnes, or 2500 tonnes.

Certain embodiments of the present invention will now be described, by way of example only, and with reference to the accompanying drawings, in which:

Figure 1 shows a floating offshore wind turbine;
Figure 2 shows a spar platform for supporting an offshore wind turbine;
Figure 3 shows the floating spar platform of Figure 2 in an initial state;
Figure 4 shows the floating spar platform of Figure 2 in an installation state that is optimised for installing a wind turbine on the platform, compared to the spar platform in the initial state; and
Figures 5A-5C are graphs showing relationships between wave period and the amplitude of wave-induced motions in surge, heave and pitch for a spar platform in the initial state and the installation state.

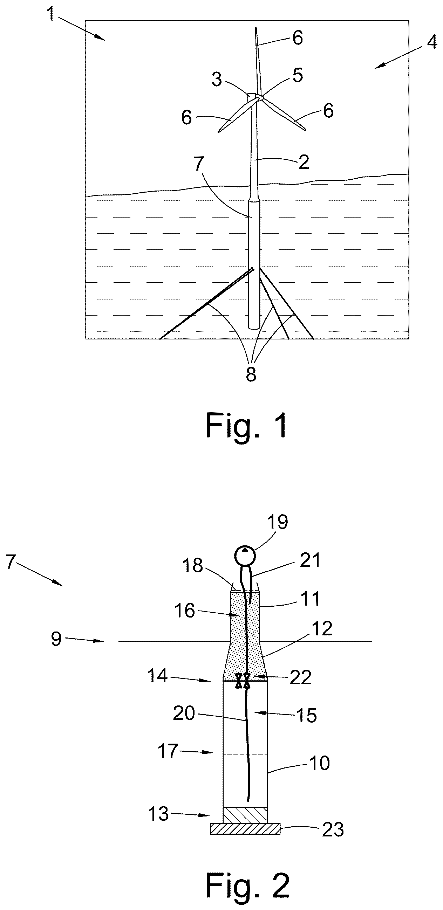

Figure 1 illustrates a floating offshore wind turbine 1. The floating wind turbine 1 comprises a tower 2 and a nacelle 3 mounted at the top of the tower 2, and a rotor 4, comprising a rotor hub 5 and a plurality of blades 6, rotatably mounded to the nacelle 3.

The nacelle 3 may be configured to rotate about a longitudinal axis of the tower 2, which is approximately vertical in operation, and is controlled in operation to face into oncoming wind.

The rotor 4 is configured to rotate about a substantially horizontal axis so that the blades 6 are driven to rotate by the oncoming wind. The rotor 4 is coupled to a drive shaft of a generator (not shown) housed within the nacelle 3.

The tower 2 is mounted on a spar platform 7, which is tethered to the sea bed by moorings 8.

Floating offshore wind turbines are usually designed with large rotor diameters to generate a high output power to maximise cost efficiency. Smaller offshore wind turbines might be rated at around 3-4MW and have rotor diameters of only about 100m. Typically, however, floating offshore wind turbines have power outputs rated at greater than 8MW and today such wind turbines are commonly designed to achieve a rated power output of around 12-13 MW, and may have a rotor diameter of between 160m and 250m.

Figure 2 shows the spar platform 7 for supporting the wind turbine structure at an offshore location. The spar platform 7 has a classic spar buoy shape, i.e. an elongate, thin, vertical, substantially cylindrical column. The spar platform 7 comprises a lower cylindrical portion 10 and an upper cylindrical portion 11. The upper and lower portions 11, 10 each have a substantially constant radius along their lengths. The radius of the lower cylindrical portion 10 is larger than the radius of the upper cylindrical portion 11.

The upper and lower cylindrical portions 11, 10 are connected by a cone portion 12. The cone portion 12 is a frustoconical portion that has a radius at one end (i.e. the lower end) that is equal to the radius of the lower cylindrical portion 10 and a radius at the other end (i.e. the upper end) that is equal to the radius of the upper cylindrical portion 11.

In Figure 2 the spar platform 7 is shown floating in a body of water such that the waterline 9 resides in the upper cylindrical section.

The spar platform 7 has a fixed ballast 13 at its lower end. This helps to stabilise the spar platform 7 against overturning when it is floating in a body of water.

Optionally, the spar platform 7 may have a heave plate 23 affixed to its lower end. The spar platform 7 of Figure 2 is shown with such an optional heave plate 23. The heave plate 23 comprises a horizontal circular plate having a larger diameter than the lower cylindrical portion 10 of the spar platform 7. This acts to add damping to the spar platform 7 against heave motion and also increases the hydrodynamic added mass of the spar platform in heave. The heave plate 23 may form part of the fixed ballast 13.

An internal compartment is defined within the spar platform 7. The internal compartment is separated by a horizontal deck 14. The horizontal deck 14 provides a fluid tight partition between upper and lower portions of the internal compartment. The lower portion of the internal compartment defines a first ballast tank 15 and the upper portion of the internal volume, separated from lower portion by the horizontal deck 14, defines a second ballast tank 16. Hence, the spar platform 7 includes a first ballast tank 15, and a second ballast tank 16 that is arranged vertically above the first ballast tank 15.

Ballast, such as sea water, can be held in the first and/or second ballast tanks 15, 16. Accordingly, the total amount of ballast held in the spar platform 7 can be adjusted by adding ballast to, or removing ballast from, one or both of the ballast tanks 15, 16. In Figure 2, the level of ballast within the first ballast tank 15 is shown by the dashed line 17, and the level of ballast within the second ballast tank 16 is shown by the dashed line 18.

The spar platform 7 of Figure 2 includes a pump 19 for pumping water into and out of the first and second ballast tanks 15, 16. The pump 19 is fluidly connected to the first ballast tank 15 by a first hose 20 that passes through the horizontal deck 14. The first hose 20 extends to the bottom of the first ballast tank 15 so that substantially all of the ballast held in the first ballast tank 15 can be pumped out by the pump 19 via the first hose 20. A second hose 21 fluidly connects the pump 19 with the second ballast tank 16 in a similar way.

In alternative arrangements, the spar platform 7 may not include a pump 19. Rather, when pumping is required, the spar platform 7 may be fluidly connected to external pumping equipment, e.g. located on board an offshore installation or vessel adjacent to the spar platform 7.

The first and second ballast tanks 15, 16 are fluidly connected with one another via a control valve 22 in the horizontal deck 14. When the control valve 22 is closed, water held within the second ballast tank 16 is prevented from flowing into the first ballast tank 15. The control valve 22 can be opened to allow water to pass from the second ballast tank 16 to the first ballast tank 15 under the action of gravity. The bottom of the second ballast tank 16 (i.e. the upper surface of the horizontal deck 14) may include a slope directed downwards towards the control valve 22 so that liquid within the second tank will flow towards the control valve 22 under the action of gravity.

The spar platform 7 may include a controller (not shown) that can be used to adjust the ballast in the first and/or second ballast tanks 15, 16 by controlling operation of the pump 19 and/or the control valve 22.

Floating structures, such as the spar platform 7 shown in Figure 2, are subject to wave forces that cause them to move about in the water. As discussed above, these wave-induced motions can have large amplitudes when the waves acting on the structure have a period that is at, or close to, the structure's natural period.

For a cylindrical structure floating in a body of water, the natural period of the floating structure in heave $T_{heave}$ is given by the following equation:

$$T_{heave} = \sqrt{\frac{m + A_{33}}{\rho g \pi R_{wl}^{2}}}, \qquad\qquad (1)$$

Here, m is the overall mass of the floating structure, $A_{33}$ is the hydrodynamic added mass in heave, p is the density of the water in which the structure is floating, g is gravitational acceleration, and $R_{wl}$ is the radius of the structure at the water line. The heave motion of the structure (i.e. the linear vertical, up/down motion) will have a large amplitude if the structure is acted on by waves having a period at or close to its natural period in heave $T_{heave}$.

For a cylindrical structure, the moment of inertia $I$ in roll and pitch can be assumed to be identical. The same applies for the hydrodynamic added mass in roll $A_{44}$ and pitch $A_{55}$, i.e. for a cylindrical structure $A_{44} = A_{55}$. Accordingly, the natural period of a floating structure in roll $T_{roll}$ and pitch $T_{pitch}$ can be expressed with the following equation:

$$T_{roll} = T_{pitch} = \sqrt{\frac{I + A_{55}}{\rho g \frac{\pi}{4} R_{wl}^{2} + \rho g V z_{B} - mg z_{G}}}, \qquad\qquad (2)$$

were $V$ is the volume of the submerged body, $z_{B}$ is the vertical distance between the waterline 9 and the centre of buoyancy of the structure, and $z_{G}$ is the vertical distance between the waterline 9 and the centre of gravity of the structure.

In Equation (2), both $z_{B}$ and $z_{G}$ are measured relative to the waterline 9. **If** the centre of gravity or the centre of buoyancy is below the waterline 9, $z_{B}$ and $z_{G}$ respectively are expressed as negative values. On the other hand, if the centre of gravity or the centre of buoyancy is above the waterline 9, $z_{B}$ and $z_{G}$ respectively are expressed as positive values.

Based on Equations 1 and 2, it will be appreciated that the natural periods of a floating structure in heave, pitch and roll can be adjusted through control of its mass m, the position of its centre of gravity $z_{G}$, and the radius of the structure at the waterline $R_{wl}$. The arrangement of the first and second ballast tanks 15, 16 of the spar platform 7 of Figure 2 allows for increased control over these properties, and hence increased control over the natural periods of the spar platform 7.

The centre of gravity of the spar platform 7 can be changed by adjusting the ballast in the first and/or second ballast tanks 15, 16. For instance, pumping water into the second ballast tank 16 and/or pumping water out of the first ballast tank 15 may raise the centre of gravity (relative to the bottom of the spar platform 7) and decrease the distance between the centre of gravity and the centre of buoyancy of the spar platform 7. This will reduce the value of the denominator in Equation 2 and increase the natural periods in pitch and roll $T_{pitch}$, $T_{roll}$.

Conversely, pumping water out of the second tank and/or pumping water into the first tank may lower the centre of gravity (relative to the bottom of the spar platform 7) and increase the distance between the centre of gravity and the centre of buoyancy of the spar platform 7. This will increase the value of the denominator of Equation 2 and reduce the natural periods in pitch and roll $T_{pitch}$, $T_{roll}$.

It is also possible to change the radius of the spar platform 7 at the waterline 9. The vertical position of the spar platform 7 relative to the body of water can be changed by adjusting the ballast in the first and/or second ballast tanks 15, 16. Pumping water into the first and/or second ballast tanks 15, 16 may lower the vertical position of the spar platform 7, and pumping water out of the first and/or second ballast tanks 15, 16 may raise the vertical position of the spar platform 7. Since the radius of the spar platform 7 varies along its length, the radius of the spar platform 7 at the waterline 9 can be changed by adjusting the vertical position of the spar platform 7 in the body of water.

Decreasing the radius of the spar structure at the waterline 9 will cause the values of the denominators of Equations 1 and 2 to decrease, thereby increasing the natural periods in heave, roll and pitch $T_{heave}$, $T_{roll}$, $T_{pitch}$. Conversely, increasing the radius of the spar structure at the waterline 9 will cause the denominators of Equations 1 and 2 to increase, thereby reducing the natural periods in heave, roll and pitch $T_{heave}$, $T_{roll}$, $T_{pitch}$.

During installation of a wind turbine on a floating spar platform 7, or whilst performing maintenance on a floating offshore wind turbine, it is desirable to minimise wave-induced motions of the floating structure. As the wave-induced motions become larger it becomes increasingly difficult to perform the installation and/or maintenance operations. These processes may even become impossible if the wave-induced motions become too large.

By adjusting the natural periods of the spar platform 7 in heave, roll and pitch $T_{heave}$, $T_{roll}$, $T_{pitch}$, it is possible to move the natural periods of the spar platform 7 away from the periods of the waves acting on the spar platform 7. Hence, it is possible to control and/or reduce the amplitude of the wave-induced heave, roll and pitch motions by adjusting the natural periods of the spar platform 7.

It will be appreciated that pitching motions (i.e. rotational motion about the transverse axis) of the spar platform 7 will cause corresponding surge motion (i.e. linear front/back motion). Similarly, rolling motions (i.e. rotational motion about the horizontal front/back axis) will lead to corresponding sway motion (i.e. linear side-to-side motion). Hence, reducing the amplitude of the wave-induced pitching and rolling motions can also reduce the amplitude of the wave-induced surge and sway motions respectively.

An example of how the spar platform 7 may be controlled in order to limit wave-induced motions during installation of a floating offshore wind turbine will now be described with reference to Figures 2, 3 and 4.

The installation process may take place at a suitable offshore location (i.e. an installation location), for instance adjacent to a proposed operational site for a floating offshore wind turbine (i.e. where the floating offshore wind turbine will be located when generating electricity).

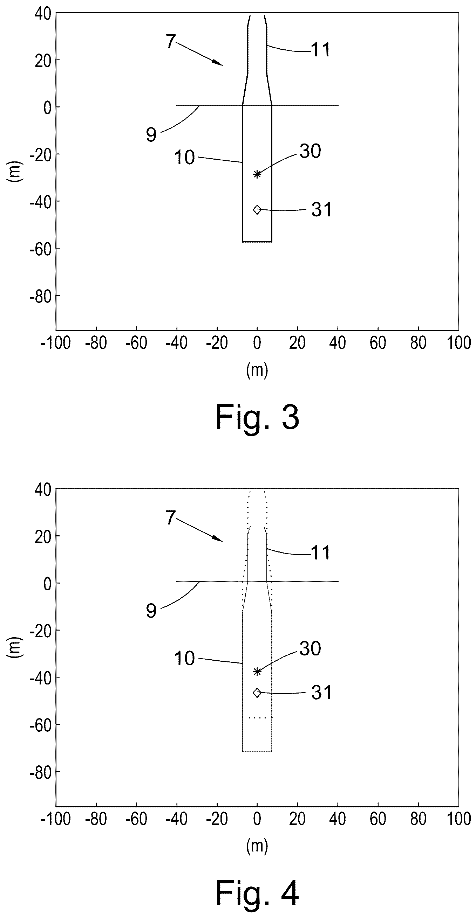

Figure 3 shows an initial state of the spar platform 7 at the installation location. In the initial state, the first and second ballast tanks 15, 16 may be empty. In Figure 3, the y-axis represents vertical distances (in metres) relative to the waterline 9 (shown by the horizontal line at 0m), and the x-axis shows horizontal distances (in meters). The centre of buoyancy 30 and the centre of gravity 31 of the spar platform 7 are shown below the waterline 9, with the centre of buoyancy 30 vertically above the centre of gravity 31.

In the initial state shown in Figure 3 the spar platform 7 is at a vertical position such that the large-radius lower cylindrical portion 10 is at the waterline 9. Owing to the fixed ballast 13 at the bottom of the spar platform 7, the centre of gravity 31 is close to the bottom of the spar platform 7. In this configuration, the natural periods of the spar platform 7 in heave, roll and pitch $T_{heave}$, $T_{roll}$, $T_{pitch}$ may closely align with the period of wave motions. As a result, the spar platform 7 may experience large wave-induced motions, making it difficult or indeed impossible to install the wind turbine on the spar platform 7.

In order to reduce the amplitude of the wave-induced motions and make installation simpler, the spar platform 7 may be placed into a temporary installation state designed to limit wave-induced motion of the spar platform 7. This may be achieved by adding water to the first and/or second ballast tanks 15, 16 such that the natural period of the spar platform 7 in heave, roll and pitch $T_{heave}$, $T_{roll}$, $T_{pitch}$ do not coincide with the period of the waves acting on the spar platform 7.

Typically, waves have periods in the range of 5 to 20 seconds. Hence, the installation state may be such that the natural periods of the spar platform 7 in heave, roll and pitch $T_{heave}$, $T_{roll}$, $T_{pitch}$ are greater than 20 seconds.

Figure 4 shows the installation state of the spar platform 7 (solid line) compared to the initial state (dashed line). Figure 4 also shows the centre of gravity 31 and centre of buoyancy 30 of the spar platform 7 in the installation state.

In the installation state, the spar platform 7 is at a vertical position such that the upper cylindrical portion 11 is at the waterline 9. Since the radius of the lower cylindrical portion 10 is larger than the radius of the upper cylindrical portion 11, the radius of the spar platform at the waterline $R_{wl}$ is less in the installation state compared to the initial state.

Also, the centre of gravity 31 is further from the bottom of the spar platform 7 in the installation state and closer to the centre of buoyancy 30 compared to the initial state. This can be seen through a comparison of Figures 3 and 4.

Thus, for the installation state, the values of the denominators in Equations 1 and 2 are less than in the initial state. Hence, the natural periods of the spar platform 7 in heave, roll and pitch $T_{heave}$, $T_{roll}$, $T_{pitch}$ are greater.

If the centre of gravity 31 rises above the centre of buoyancy 30 then the spar platform 7 may become unstable and less able to resist overturning. Hence, in the installation state, the centre of gravity 31 should remain vertically below the centre of buoyancy 30.

The spar platform 7 may be moved from the initial state to the installation state by pumping water into the second ballast tank 16. This increases the overall mass m of the spar platform 7 and lowers the vertical position of the spar platform 7 in the water. Moreover, given that the second ballast tank 16 is arranged vertically above the first ballast tank 15, and is displaced from the bottom of the spar platform 7, adding water to the second ballast tank 16 raises the position of the centre of gravity 31 relative to the bottom of the spar platform 7. That is to say, adding water to the second ballast tank 16 increases the distance between the bottom of the spar platform 7 and the centre of gravity 31.

Water may also be pumped into the first ballast tank 15 in order to move the spar platform 7 to the installation state from the initial state. However, doing so will reduce the effect that pumping water into the second ballast tank 16 will have on the relative position of the centre of gravity 31. Hence, if water is pumped into the first ballast tank 15, the quantity may be less than the quantity of water pumped into the second ballast tank 16.

In the installation state, the amplitude of wave-induced motions in heave, roll and pitch are reduced compared to the initial state. This facilitates installation of a wind turbine on the spar platform 7, and makes installation possible in a wider range of sea conditions.

Once the spar platform 7 is in the installation state the wind turbine can be installed.

The wind turbine may be transported to the installation location, for instance, on the deck of a barge. In this example, the floating wind turbine is a fully assembled wind turbine, i.e. with most or all of the major wind turbine components (the tower 2, nacelle 3 and/or rotor components) assembled together. At the installation location, the floating wind turbine may be lifted by a crane into a mating relationship with the spar platform 7 and then coupled to the spar platform 7 in the known manner.

Alternatively, the wind turbine may be transported to the installation location in multiple pieces, and assembled on the spar platform 7. For instance, the tower 2 may be lifted from the barge by the crane and moved into a mating arrangement with the spar platform 7. Once the tower 2 has been coupled to the spar platform 7 in the known manner, the crane may then be used to lift the nacelle 3 from the barge and move it into a mating arrangement with the tower 2, where it can be coupled to the tower 2. This process can be repeated until the wind turbine has been fully assembled on the spar platform 7.

Installing the wind turbine on the spar platform 7 increases the total mass of the floating structure, i.e. the spar platform 7 and the wind turbine. The centre of gravity 31 of the floating structure will also be raised relative to the bottom of the spar platform 7 as a result of installing the wind turbine. The addition of the generator and rotor components, in particular, will affect the centre of gravity 31 of the floating structure since their relatively large masses are arranged at the top of the tower 2. This may cause the centre of gravity 31 of the floating structure to rise above the centre of buoyancy 30 which, as discussed above, can cause the floating structure to become unstable. Hence, once the wind turbine is installed on the spar platform 7, the spar platform 7 may be moved into an operational state such that the wind turbine can be stably supported.

In the operational state the centre of gravity 31 of the floating structure is vertically below the centre of buoyancy 30, and the distance between the centre of gravity 31 and the centre of buoyancy 30 is such that angular displacement of the floating structure produces a righting moment to oppose the angular displacement. Hence, the operational state ensures that the floating structure will remain stable against overturning.

In order to move from the installation state to the operational state, a portion of the water in the second ballast tank 16 may be moved to the first ballast tank 15 by opening the control valve 22. Some of the water in the second ballast tank 16 may also be removed from the spar platform 7, for instance by pumping it overboard. In this way, the centre of gravity 31 is moved closer to the bottom of the spar platform 7. Water may be removed from the spar platform 7, for instance, to account for the additional mass of the wind turbine and to ensure that the floating structure does not sit too low in the water.

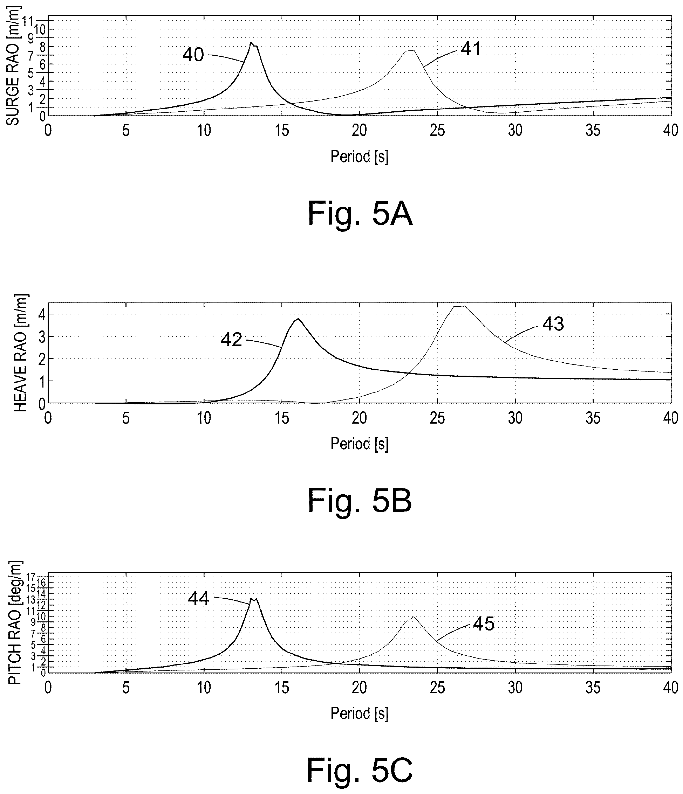

The effect that moving the spar platform 7 from the initial state to the installation state has on the wave-induced motion of the spar platform 7 can be seen from Figures 5A-C.

Figures 5A-C are graphs showing how the amplitude of wave-induced surge motions (Figure 5A), heave motions (Figure 5B) and pitch motions (Figure 5C) vary when the spar platform 7 is acted on by waves of differing periods. The period of the wave motions experienced by the spar platform 7 are given along the x-axes, and the amplitude of the response of the spar platform 7 in surge, heave and pitch is given along the y-axes. The response amplitude of the surge and heave wave-induced motions (i.e. Figures 5A and 5B) is measured in m/m, i.e. indicating the amplitude of the wave-induced motion of the spar platform 7 relative to the height (i.e. amplitude) of the waves acting on the platform. For instance, an amplitude response of 10 m/m indicates that the amplitude of the wave-induced motion is 10m when the spar platform 7 is acted on by a 1m high wave, and 20m when acted on by a 2m high wave, and so on. In Figure 5C, the response amplitude of the pitch wave-induced motion is measured in degrees/m, i.e. indicating the amplitude of the wave-induced rotation of the spar platform 7 about its transverse axis relative to the height of the waves acting on the spar platform 7. Hence, the smaller the response amplitude, the smaller the wave-induced motion of the spar platform 7.

In Figure 5A, curve 40 indicates the amplitude of wave-induced surge motion for the spar platform 7 in the initial state. As can be seen, the peak amplitude response of the wave-induced surge motion of the spar platform 7 in the initial state is approximately 8.5 m/m, and this occurs when the spar platform 7 is acted on by waves having a period of approximately 13 seconds.

Curve 41 indicates the amplitude of wave-induced surge motion for the spar platform 7 in the installation state. The peak amplitude response of the wave-induced surge motion of the spar platform 7 in the installation state is approximately 7.5 m/m. This is smaller than the peak amplitude response of the spar platform 7 in the initial state, and occurs when the spar platform 7 is acted on by waves having a period of approximately 23 seconds.

In Figure 5B, curve 42 in Figure 5B shows the amplitude of wave-induced heave motion for the spar platform 7 in the initial state. The peak amplitude response of the wave-induced heave motion is approximately 4 m/m and this occurs when the waves acting on the spar platform 7 have a period of approximately 16 seconds.

Curve 43 shows the amplitude of wave-induced heave motion for the spar platform 7 in the installation state. The peak amplitude response of the wave-induced heave motion is approximately 4 m/m and this occurs when the waves acting on the spar platform 7 have a period of approximately 27 seconds.

With reference to Figure 5C, curve 44 shows the amplitude of the wave-induced pitch motion for the spar platform 7 in the initial state. When the spar platform 7 is acted on by waves having a period of approximately 13 seconds it experiences the largest wave-induced pitch motion, which is approximately 13 degrees/m.

Curve 45 shows the amplitude of the wave-induced pitch motion for the spar platform 7 in the installation state. The peak amplitude response of the wave-induced pitch motion of the spar platform 7 in the installation state is approximately 10 degrees/m. This is smaller than the peak amplitude response of the spar platform 7 in the initial state, and occurs when the spar platform 7 is acted on by waves having a period of approximately 23 seconds.

It will be noted that in the initial state the spar platform 7 experiences the largest amplitude wave-induced motions when it is acted on by waves having a period coinciding with the typical period of wave motions, i.e. having a period between 5 and 20 seconds. Hence, the spar platform 7 in the initial state will tend to experience large wave-induced motions in typical sea conditions.

However, compared to the initial state, the wave-induced motions experienced by the spar platform 7 in the installation state are small when the spar platform 7 is acted on by waves having a period between 5 to 20 seconds (i.e. typical wave periods). In the installation state, the largest wave-induced motions are experienced when the spar platform 7 is acted on by waves having periods of over 20 seconds, which are less likely to occur in normal sea conditions. Hence, in the installation state, the spar platform 7 will experience smaller wave-induced motions in typical sea conditions.

It will also be noted that the maximum wave-induced motions in surge and pitch are smaller for the installation state compared to the initial state. Therefore, even in abnormal sea conditions, when the period of the waves may be above 20 seconds, the maximum wave-induced surge and pitch motions will be smaller for the spar platform 7 in the installation state.

The spar platform 7 may also be moved into a maintenance state such that maintenance and/or repair work can be carried out on the floating offshore wind turbine.

During maintenance and repair, it may be necessary to remove one or more components of the wind turbine, e.g. for inspection, repair or replacement. Maintenance and repair may also require one or more components to be installed on the floating offshore wind turbine 1. For instance, maintenance may involve removing and/or installing one or more blades 6, the rotor 4, the rotor hub 5 and/or the generator.

In the maintenance state, the vertical position and/or the centre of mass of the floating offshore wind turbine 1 may be altered such that the natural periods of the floating offshore wind turbine 1 in heave, roll and pitch $T_{heave}$, $T_{roll}$, $T_{pitch}$ do not align with the period of the waves acting on the floating offshore wind turbine 1. This may involve lowering the vertical position of the floating offshore wind turbine 1 and/or increasing the distance between its centre of gravity 31 and the bottom of the spar platform 7. This may be achieved by pumping water into the second ballast tank 16 and/or pumping water out of the first ballast tank 15. For instance, water may pumped from the first ballast tank 15 to the second ballast tank 16. The maintenance state is designed to prevent large wave-induced motions by controlling the natural periods of the floating structure in heave, roll and pitch $T_{heave}$, $T_{roll}$, $T_{pitch}$.

Once in the maintenance state, the component(s) may be removed from the floating offshore wind turbine 1 or installed on the floating offshore wind turbine 1, for instance by a crane. The necessary inspection and/or repair of the floating offshore wind turbine 1 and/or the component(s) may then be carried out. In the maintenance state, the amplitude of the wave-induced motions will be curtailed, making it easier to remove and/or install component(s).

It will be appreciated that, during maintenance and/or repair, the floating characteristics of the floating offshore wind turbine will change as components are removed and/or installed. Hence, the vertical position and/or the centre of gravity of the floating offshore wind turbine 1 may be altered multiple times in order to curtail wave-induced motions. For instance, it may be necessary to adjust the vertical position and/or the centre of gravity each time before a component is removed from or installed on the floating offshore wind turbine 1.

Removing one or more components of the wind turbine will alter the vertical position and the centre of gravity 31 of the floating offshore wind turbine 1 and hence alter the natural periods of the floating structure in heave, roll and pitch $T_{heave}$, $T_{roll}$, $T_{pitch}$. This may cause the natural periods of the floating offshore wind turbine 1 to align closely with the period of the waves acting on the floating structure and give rise to large wave-induced motions. This may make it difficult or impossible to perform subsequent maintenance or repair operations. Hence, after component(s) have been removed, the vertical position and/or the centre of mass of the floating offshore wind turbine 1 may be altered as discussed above such that the natural periods of the floating offshore wind turbine 1 in heave, roll and pitch $T_{heave}$, $T_{roll}$, $T_{pitch}$ do not align with the period of the waves acting on the floating offshore wind turbine 1.

Compared to removing a component from the wind turbine, installing a component requires greater precision and is more sensitive to motions of the offshore wind turbine. Hence, for wave-induced motions of a certain amplitude, it may be possible to remove component(s) from the offshore wind turbine without moving the spar platform 7 into the maintenance state whereas, for the same wave conditions, it may be more difficult or even impossible to install a component on the floating offshore wind turbine 1 without moving the spar platform 7 into the maintenance state. Accordingly, it may not be necessary to move the spar platform 7 into the maintenance state before removing a component from the offshore wind turbine 1. The maintenance state is more likely to be required during the installation of components on the floating offshore wind turbine 1.

During maintenance, the floating characteristics of the floating offshore wind turbine 1 may not be optimal. For instance, the centre of gravity 31 of the floating offshore wind turbine 1 may be vertically above its centre of buoyancy 30 and so the floating structure may not be stable against overturning. Hence, during maintenance, the floating offshore wind turbine 1 may be supported, for instance by a crane.

The following clauses set out features of the invention which may or may not presently be claimed but which may form the basis for future amendments and/or divisional applications:

1. A floating spar platform for supporting an offshore wind turbine, the spar platform comprising:

   at least one first ballast tank for holding adjustable ballast; and
   at least one second ballast tank for holding adjustable ballast, wherein the second ballast tank is arranged vertically higher than the first ballast tank.

2. A floating spar platform according to clause 1, wherein the spar platform comprises one or more pumps arranged to pump ballast into and/or out of the first and/or second ballast tanks.

3. A floating spar platform according to any of clauses 1 or 2, wherein the first ballast tank is fluidly connected to the second ballast tank through a flow regulating device.

4. A floating spar platform according to clause 3, wherein the flow regulating device is a control valve.

5. A floating spar platform according to clause 3 or 4, wherein the flow regulating device is arranged such that liquid can flow from the second ballast tank to the first ballast tank under gravity when the flow regulating device is open or partially open.

6. A floating spar platform according to any of clauses 3, 4 or 5, wherein the bottom of the second ballast tank slopes downwardly towards the flow regulating device.

7. A floating spar platform according to any preceding clause, wherein the spar platform is arranged such that when the first and second ballast tanks are empty, the centre of gravity of the spar platform is vertically below the centre of buoyancy of the spar platform.

8. A floating spar platform according to any preceding clause, wherein the spar platform comprises a fixed ballast arranged at the bottom of the spar platform.

9. A floating spar platform according to any preceding clause, wherein the first and/or second ballast tanks each has a volume of up to $2500m^3$.

10. A floating spar platform according to any preceding clause, wherein the cross sectional area of the spar platform varies along its length, preferably wherein the cross sectional area of the spar platform decreases from the bottom of the spar platform to the top.

11. A floating spar platform according to clause 10, wherein the spar platform comprises a portion with a cross sectional area that is smaller than the cross sectional area of another portion.

12. A floating spar platform according to any preceding clause, wherein the spar platform includes an internal compartment, the internal compartment being separated into the first and second ballast tanks by a divider arranged across the internal compartment.

13. A floating offshore wind turbine comprising a wind turbine mounted on a floating spar platform according to any preceding clause, wherein the wind turbine comprises:

a tower mounted on the spar platform;
a nacelle mounted at the top of the tower;
one or more rotor blades rotatably mounted to the nacelle by a rotor hub; and
a generator arranged to be driven by rotation of the rotor hub.

14. A method of installing a floating offshore wind turbine, the method comprising:

providing a floating spar platform in a body of water;
using adjustable ballast associated with the floating spar platform in order to increase a first vertical distance between a bottom of the spar platform and a centre of gravity of the spar platform; and
after the first vertical distance has been increased, installing a wind turbine on the floating spar platform.

15. A method according to clause 14, wherein increasing the first vertical distance decreases a second vertical distance between the centre of gravity of the spar platform and a centre of buoyancy of the spar platform.

16. A method according to clause 14 or 15, wherein the first vertical distance is increased such that the natural period of the spar platform in pitch and/or roll is greater than 20 seconds.

17. A method according to any of clauses 14, 15 or 16, further comprising reducing a cross sectional area of the spar platform at the waterline by adjusting a vertical position of the spar platform relative to the waterline.

18. A method according to clause 17, wherein the cross sectional area of the spar platform at the waterline is reduced such that the natural period of the spar platform in heave, pitch and/or roll is greater than 20 seconds.

19. A method according to any of clauses 14 to 18, further comprising, after the wind turbine has been installed on the spar platform, adding, removing and/or moving adjustable ballast associated with the floating spar platform in order to decrease a third vertical distance between the bottom of the spar platform and a centre of gravity of the floating offshore wind turbine.

20. A method according to any of clauses 13 to 19, wherein the floating spar platform comprises the floating spar platform according to any of clauses 1 to 12.

21. A method of performing maintenance of a floating offshore wind turbine, wherein the floating offshore wind turbine comprises a wind turbine mounted on a floating spar platform, the method comprising:

using adjustable ballast associated with the floating spar platform in order to increase a first vertical distance between a bottom of the spar platform and a centre of gravity of the floating offshore wind turbine; and
after the first vertical distance has been increased, removing a component from the floating offshore wind turbine and/or installing a component on the floating offshore wind turbine.

22. A method according to clause 21, wherein the component comprises one or more of a tower, a nacelle, a rotor, a rotor hub, a turbine blade and a generator.

23. A method according to clause 21 or 22, wherein the first vertical distance is increased such that the centre of gravity of the floating offshore wind turbine is vertically below the centre of buoyancy of the floating offshore wind turbine.

24. A method according to any of clauses 21, 22 or 23, wherein the first vertical distance is increased such that a natural period of the floating offshore wind turbine in pitch and/or roll is greater than 20 seconds.

25. A method according to any of clauses 21 to 24, further comprising adjusting a cross sectional area of the floating offshore wind turbine at the waterline by adjusting a vertical position of the floating offshore wind turbine relative to the waterline.

26. A method according to clause 25, wherein the cross sectional area of the floating offshore wind turbine is adjusted such that the natural period of the floating offshore wind turbine in heave, pitch and/or roll is greater than 20 seconds.

A method according to any of clauses 20 to 26, wherein the floating spar platform comprises the floating spar platform according to any of clauses 1 to 12.

**Claims**

1. A method of installing a floating offshore wind turbine, the method comprising:

   providing a floating spar platform in a body of water;
   using adjustable ballast associated with the floating spar platform in order to increase a first vertical distance between a bottom of the spar platform and a centre of gravity of the spar platform; and
   after the first vertical distance has been increased, installing a wind turbine on the floating spar platform.

2. A method according to claim 1, wherein increasing the first vertical distance decreases a second vertical distance between the centre of gravity of the spar platform and a centre of buoyancy of the spar platform.

3. A method according to claim 1 or 2, wherein the first vertical distance is increased such that the natural period of the spar platform in pitch and/or roll is greater than 20 seconds.

4. A method according to any of claims 1, 2 or 3, further comprising reducing a cross sectional area of the spar platform at the waterline by adjusting a vertical position of the spar platform relative to the waterline.

5. A method according to claim 4, wherein the cross sectional area of the spar platform at the waterline is reduced such that the natural period of the spar platform in heave, pitch and/or roll is greater than 20 seconds.

6. A method according to any of claims 1 to 5, further comprising, after the wind turbine has been installed on the spar platform, adding, removing and/or moving adjustable ballast associated with the floating spar platform in order to decrease a third vertical distance between the bottom of the spar platform and a centre of gravity of the floating offshore wind turbine.

7. A method of performing maintenance of a floating offshore wind turbine, wherein the floating offshore wind turbine comprises a wind turbine mounted on a floating spar platform, the method comprising:

   using adjustable ballast associated with the floating spar platform in order to increase a first vertical distance between a bottom of the spar platform and a centre of gravity of the floating offshore wind turbine; and
   after the first vertical distance has been increased, removing a component from the floating offshore wind turbine and/or installing a component on the floating offshore wind turbine.

8. A method according to claim 7, wherein the component comprises one or more of a tower, a nacelle, a rotor, a rotor hub, a turbine blade and a generator.

9. A method according to claim 7 or 8, wherein the first vertical distance is increased such that the centre of gravity of the floating offshore wind turbine is vertically below the centre of buoyancy of the floating offshore wind turbine.

10. A method according to any of claims 7, 8 or 9, wherein the first vertical distance is increased such that a natural period of the floating offshore wind turbine in pitch and/or roll is greater than 20 seconds.

11. A method according to any of claims 7 to 10, further comprising adjusting a cross sectional area of the floating offshore wind turbine at the waterline by adjusting a vertical position of the floating offshore wind turbine relative to the waterline.

12. A method according to claim 11, wherein the cross sectional area of the floating offshore wind turbine is adjusted such that the natural period of the floating offshore wind turbine in heave, pitch and/or roll is greater than 20 seconds.

Fig. 1

Fig. 2

Fig. 3

Fig. 4

Fig. 5A

Fig. 5B

Fig. 5C